# EUROPÄISCHE PATENTSCHRIFT

(11) **EP 0 973 694 B1**
(45) Veröffentlichungstag und Bekanntmachung des Hinweises auf die Patenterteilung: **28.11.2001**
(21) Anmeldenummer: 98907936.3
(22) Anmeldetag: 10.01.1998
(51) Int. Cl.: C02F 1/66

(54) **VERWENDUNG EINER CaCO3-HALTIGEN ZUSAMMENSETZUNG ALS ADDITIV FÜR MEERWASSER, WORIN MEERESTIERE AUFGEZOGEN ODER GEHALTEN WERDEN**
USE OF A CaCO3-CONTAINING COMPOSITION AS ADDITIVE TO SEAWATER IN WHICH MARINE ANIMALS ARE REARED OR KEPT
UTILISATION D'UNE COMPOSITION CONTENANT DU CaCO3 COMME ADDITIF POUR L'EAU DE MER D'OU LES ANIMAUX MARINS ONT ETE ENLEVES OU Y SONT MAINTENUS

(30) Priorität: 16.01.1997 DE 19701302
(43) Veröffentlichungstag der Anmeldung: 26.01.2000
(73) Patentinhaber: Söll, Peter, 95028 Hof (DE); Ksiensyk, Horst, 40699 Erkrath (DE); Willuweit, Thomas, 95028 Hof (DE)
(72) Erfinder: KSIENSYK, Horst, D-40699 Erkrath (DE); WILLUWEIT, Thomas, D-95028 Hof (DE)
(74) Vertreter: Christophersen, Ruth
(86) Internationale Anmeldenummer: EP9800110
(87) Internationale Veröffentlichungsnummer: WO9831633

(56) Entgegenhaltungen:
- DE-C- 4 344 926
- US-A- 5 008 020
- PATENT ABSTRACTS OF JAPAN, vol. 2, no.28 (M-009), 22 February 1978; & JP,A, 52144145 (ISHIKAWAJIMA HARIMA HEAVY IND CO LTD), 1 December 1977 (01.12.77)abstract

## Beschreibung

Die vorliegende Erfindung betrifft die Verwendung einer CaCO₃, CaCl₂ und/oder CaSO₄ und NaHCO₃-haltigen Zusammensetzung als Additiv für natürliches und synthetisches Meerwasser, worin Meerestiere aufgezogen oder gehalten werden.

Angesichts der zunehmenden Überfischung der Meere und der Verunreinigung der Gewässer wird es immer schwieriger, Meeresfische und Krebstiere, die insbesondere in den asiatischen Ländern ein Hauptnahrungsmittel darstellen, der Bevölkerung in ausreichenden Mengen und günstigen Preisen dem Verbraucher als Nahrungsmittel anzubieten. Man ist daher dazu übergegangen, die Meerestiere, insbesondere Krebstiere, in Zuchtstationen aufzuziehen. Die Tiere werden in der Regel in Vorhaltebecken vorgezogen und danach in größere Teichanlagen überführt.

Die Aufzuchtbecken oder Teichantagen sind üblicherweise mit natürlichen Wasserquellen, beispielsweise mit dem offenen Meer, über entsprechende Rohrleitungen verbunden. Die Qualität des Wassers in den Aufzuchtbecken kann stark durch die Qualität des zugeführten Meerwassers, durch Stoffwechselvorgänge der gehaltenen Meerestiere oder durch belastetes Aufzuchtfutter beeinträchtigt werden.

Insbesondere in den Aufzuchtbecken ist es aber erforderlich, daß optimale Bedingungen herrschen. Bei der Aufzucht von Krebstieren sollten ein stabiler pH-Wert und eine ausreichende Kalkhärte vorliegen. Schadstoffe, wie z.B. Aluminium-, Kupfer- oder Eisenverbindungen dürfen nicht vorhanden sein, da sie die Infektionsanfälligkeit der Meerestiere stark erhöhen. Optimale Bedingungen hinsichtlich pH-Wert und Kalkhärte fördern bei Schalentieren den Aufbau ihrer Schale und somit ihre Überlebensfähigkeit.

Neben der Aufzucht von Meerestieren für die Nahrungsmittelproduktion werden einige Meerestiere auch in entsprechenden Aquarien gehalten. Derartige Meerwasseraquarien finden sich häufig in Privathaushalten. Sie sind zwar nicht den Umweltbelastungen ausgesetzt wie die Aufzuchtstationen für die Meerestiere, bei unsachgemäßer Behandlung kommt es jedoch immer wieder zu Problemen mit der Wasserqualität.

Besonders häufig sind Störungen bei der Stabilität des pH-Wertes sowie bei der Kalk-bzw. Carbonathärte festzustellen.

Aus dem deutschen Patent DE 43 44 926 C1 ist eine Zusammensetzung zur Aufbereitung vom Wasser und Sanierung von Böden bekannt, die von
A. CaCO₃,
B. CaCl₂ und/oder Ca(NO₃)₂ und ggf. Magnesiumsalze,
C. NaHCO₃ und ggf. KHCO₃
wobei die Komponenten A und B in Stoffmengenverhältnissen von 0,1 : 1 bis 2 : 1 und die Komponenten B und C in Stoffmengenverhältnissen von 1 : 3 bis 2 : 1 vorliegen, enthält. Es wird jedoch nur der Einsatz bei Süßwasser beschrieben.

Der vorliegenden Erfindung lag somit die Aufgabe zugrunde, eine Zusammensetzung zu finden, mit der es möglich ist, in Aufzuchtstationen für Meerwasserfische und auch in Meerwasseraquarien den pH-Wert sowie die Kalkhärte und damit die Pufferkapazität zu stabilisieren, was zu einer Stabilisierung der biologischen Aktivität und der Selbstreinigungskraft des Wassers führt.

Gegenstand der vorliegenden Erfindung ist die Verwendung einer Zusammensetzung, enthaltend
A. CaCO₃,
B. CaCl₂ und/oder CaSO₄ und ggf. Magnesiumsalze,
C. NaHCO₃ und ggf. KHCO₃,
wobei die Komponenten A und B in Stoffmengenverhältnissen von 0,01 : 1 bis 2 : 1 und die Komponenten B und C in Stoffmengenverhältnissen von 1 : 3 bis 2 : 1 vorliegen, als Additiv für Meerwasser, worin Meerestiere aufgezogen oder gehalten werden.

Überraschenderweise wurde befunden, daß durch Verwendung einer Zusammensetzung enthaltend CaCO₃, CaCl₂ und/oder CaSO₄ und NaHCO₃ in den definierten Mengenverhältnissen die Wasserqualität in Meerwasseraquarien und auch in Aufzuchtstationen von Meerestieren derart stabilisiert werden kann, daß selbst das Vorhandensein von Schadstoffen, wie beispielsweise Kupfer-, Aluminium- oder Eisenverbindungen die Wasserqualität nicht beeinträchtigen.

Die erfindungsgemäß eingesetzte Zusammensetzung hat sich bei der Aufzucht von Krebstieren, wie Garnelen, als besonders geeignet erwiesen.

Als Komponenten der erfindungsgemäß eingesetzten Zusammensetzung sind alle im Handel erhältlichen Qualitäten geeignet. Übliche im Handel erhältliche Calciumsalze werden aus natürlich vorkommenden Mineralien gewonnen und können Beimengungen anderer Komponenten enthalten, die aber in der Regel die Wirkung der erfindungsgemäßen Zusammensetzung nicht beeinträchtigen. Beispielsweise können entsprechend den natürlich vorkommenden Gehalten auch Magnesiumsalze enthalten sein. Bei besonders empfindlichen Tieren sind Qualitäten mit hohen Reinheitsgraden, insbesondere Komponenten in analytischer Qualität, bevorzugt.

Als Komponente A kann jedes beliebige CaCO₃ verwendet werden, welches im Handel erhältlich ist. Als besonders günstig hat sich frisch gefälltes CaCO₃ erwiesen. Bei sehr feinkörnigen Qualitäten (Durchmesser ca. 1 µm), reichen sehr kleine Gehalte an Calciumcarbonat (Stoffmengenanteile von 0,01 bis 0,1 bezogen auf die Stoffmenge an B) aus. Die Komponente A kann bis zu 25 Gew.-% MgCO₃ enthalten. Der Gehalt an MgCO₃ sollte jedoch nicht zu hoch sein, da die Gefahr zu hoher alkalisierender Wirkung besteht, mit dem Ergebnis der einsetzenden Entcarbonisierung und damit der Kalkfällung (Enthärtung). Diese steht dem Sinn der Erfindung diametral gegenüber.

Als Komponente B können beliebige Calciumsalze wie die Chloride und Sulfate oder deren Gemische eingesetzt werden, wobei das Calciumchlorid bevorzugt ist. Auch wenn die Calciumsalze in Wasser einen pH-Wert im sauren Bereich aufweisen, wird durch Zusatz dieser Komponente ein stabiler pH-Wert in dem Bereich zwischen 6,5 und 9,5 erreicht. Die Auswahl dieser Calciumsalze ist auf keine speziellen Qualitäten beschränkt, es können alle beliebigen handelsüblichen Calciumsalze eingesetzt werden. Es können als Komponente B auch Gemische CaCl₂, CaSO₄ und Magnesiumsalzen, insbesondere aus der Gruppe Chlorid, Carbonat, Oxid und Sulfat eingesetzt werden, wobei das Stoffmengenverhältnis von Calciumsalzen zu Magnesiumsalzen in weiten Bereichen variieren kann und bevorzugt von 0,8 : 1 bis 10 : 1, besonders bevorzugt von 1 : 1 bis 6 : 1, beträgt.

Das Stoffmengenverhältnis der Komponenten A und B beträgt in der Regel 0,1 : 1 bis 2 : 1, bevorzugt 1 : 1,3 bis 1,3 : 1. Liegen alkalische Meerwässer vor, so liegt die Komponente B bevorzugt in einem Überschuß vor, das Stoffmengenverhältnis ist dann bevorzugt 1 : 1,3 bis 1 : 2.

Als dritte Komponente enthält die Zusammensetzung NaHCO₃. Als weitere Komponente kann gegebenenfalls auch KHCO₃ vorhanden sein. Auch in diesem Fall können handelsübliche Produkte jeder Qualität eingesetzt werden. KHCO₃ wird insbesondere dann eingesetzt, wenn kaliumarme Meerwässer vorliegen. In diesem Fall liegen NaHCO₃ und KHCO₃ in Stoffmengenverhältnissen von 10 : 1 bis 1 : 1 vor. Das KHCO₃ kann auch in einem Überschuß verwendet werden, dies ist jedoch aus Kostengründen wenig bevorzugt.

Die Komponenten B und C liegen üblicherweise in Stoffmengenverhältnissen von 1 : 3 bis 2 : 1, bevorzugt 1 : 2,3 bis 1 : 1,7, besonders bevorzugt 1 : 2,1 bis 1 : 1,9 vor.

Die erfindungsgemäß verwendete Zusammensetzung kann weitere übliche Zusätze enthalten, die in Additiven für Meerwasser, das der Garnelenzucht dient, enthalten sein können. Beispiele für diese Zusätze sind Huminsäuren und Bakterien.

Sollen stark saure Seewässer saniert bzw. stabilisiert werden, so kann die erfindungsgemäße Zusammensetzung auch Soda, Na₂CO₃, als Komponente D enthalten. Soda führt auch zu einer Stabilisierung der Wasserqualität hochbelastetem Meerwasser, d. h. wenn eine hohe mikrobielle Abbauarbeit geleistet wird. Das Stoffmengenverhältnis der Komponenten C : D liegt vorzugsweise in dem Bereich von 1 : 0,3 bis 1 : 0,01.

Die erfindungsgemäße eingesetzt Zusammensetzung kann noch weitere Komponenten enthalten, die insbesondere eingesetzt werden, um herkunftsorientierte Wasserqualitäten einzustellen, wie z. B. Strontium-Salze und Salze von seltenen Erden.

Eine weitere Ausführungsform der vorliegenden Erfindung betrifft die Verwendung einer Zusammensetzung, die neben den Komponenten A, B und C Kochsalz, NaCl, enthält. Eine solche Zusammensetzung wird als Meerwasser-Fertigmischung zu Süßwasser gegeben. Als weitere Komponenten kann eine Meerwasser-Fertigmischung auch Soda und die oben genannten Salze zur Feineinstellung der Wasserqualität enthalten.

Die einzelnen Komponenten können als Gemisch oder nacheinander zu dem Meerwasser zugesetzt werden. Es ist auch möglich, zuerst die Komponenten B und C und gegebenenfalls Soda, Na₂CO₃, einzusetzen, und die Komponente A später über dem Meerwasser Boden zu verteilen.

Der Zusatz der erfindungsgemäßen Zusammensetzung kann auf jede beliebige Weise erfolgen. Bei kleinen Gewässerflächen kann eine Verteilung per Hand erfolgen, bei großen Flächen haben sich maschinelle Verteilungsformen, insbesondere auch durch die Luft, als günstig erwiesen. Bei der Verwendung von Meerwasseraquarien kann die erfindungsgemäß verwendete Zusammensetzung über spezielle Anlagen zugegeben werden. Der Einsatz von Dosiereinrichtungen ist sowohl beim Einsatz in Aquarien als auch bei freien Gewässerflächen möglich. Über Dosiereinrichtungen, die mit der entsprechenden Analysentechnik ausgestattet sind, um den Inhaltsstoffe des aufzubereitenden Wassers und den pH-Wert direkt zu analysieren, ist eine automatische Einstellung der Wasserqualität möglich.

Ein weiterer Gegenstand der vorliegenden Erfindung ist ein Verfahren zur Aufbereitung von Wasser für die Aufzucht und Haltung von Meerestieren das dadurch gekennzeichnet ist, daß man als Additiv für das Meerwasser eine Zusammensetzung enthaltend
A. CaCO₃,
B. CaCl₂ und/oder CaSO₄ und ggf. Magnesiumsalze,
C. NaHCO₃ und ggf. KHCO₃,
wobei die Komponenten A und B in Stoffmengenverhältnissen von 0,01 : 1 bis 2 : 1 und die Komponenten B und C in Stoffmengenverhältnissen von 1 : 3 bis 2 : 1 vorliegen, verwendet und worin man die Komponenten B, CaCl₂ und/oder CaSO₄ und ggf. Magnesiumsalze, NaHCO₃ und ggf. KHCO₃, getrennt in H₂O löst, die Lösungen mit dem Meerwasser vermischt und das erhaltene Gemisch über bzw. durch CaCO₃ leitet.

Um die Aktivität der Komponenten B und C nicht zu beeinträchtigen, ist es in dieser Ausführungsform vorteilhaft, die Lösungen der Komponenten B und C in den entsprechenden Stoffmengenverhältnissen zügig mit aufzubereitenden Wasser zu vermischen und über CaCO₃ zu leiten. In einer bevorzugten Ausführungsform liegt das CaCO₃ als Calciumbett vor.

Es hat sich als vorteilhaft erwiesen, die Komponenten B und C werden dem aufzuarbeitenden Wasser mengenproportional beizumischen. Bevorzugt liegen die Komponenten B und C in Stoffmengenverhältnissen von 1 : 3 bis 2 : 1, bevorzugt 1 : 2,3 bis 1 : 1,7, besonders bevorzugt 1 : 2,1 bis 1 : 1,9 vor. Die Menge des verwendeten CaCO₃ ist in dieser Ausführungsform nicht von Bedeutung. Das aufzuarbeitende, die Komponenten B und C enthaltende Wasser wird über das CaCO₃ geleitet. Das CaCO₃ löst sich entsprechend dem Lösungsgleichgewicht in dem Wasser, der Überschuß bleibt als Feststoff, z. B. in einem Festbett, zurück.

Die dem Wasser in Form von B und C zugesetzten Massen werden einfach aus dem gewünschten Grad der Aufhärtung und Pufferung errechnet. Bei einer Mischung von: 0,2 mol CaCO₃ : 1 mol CaCl₂ : 1,8 mol NaHCO₃, wurde eine Aufhärtung von 1,3°dH, bei Einsatz von 100 mg Mischung pro Liter Wasser erreicht. Gleichzeitig nahm die Eisenkonzentration von 2,4 mg/l im Rohwasser auf 0,08 mg/l im aufbereiteten Wasser ab. Bei dieser Zusammensetzung nimmt die Leitfähigkeit pro 100 mg/l um 115 ± 10 µS/cm zu. Der Wirkungsgrad der Aufhärtung bez. auf die Summe an Calcium und Magnesium aus A und B ist von der Rohwasserbeschaffenheit abhängig.

Je nach Bedarf ist eine Dosierung von insgesamt 5 - 1500 mg/l der Zubereitung besonders sinnvoll. Die häufigsten Dosen liegen zwischen 50 und 300 mg/l. Im allgemeinen werden die Mindestanforderungen für Trinkwasser mit 100 bis 200 mg/l erfüllt.

## Patentansprüche

1. Verwendung einer Zusammensetzung, enthaltend
A. CaCO₃,
B. CaCl₂ und/oder CaSO₄ und ggf. Magnesiumsalze,
C. NaHCO₃ und ggf. KHCO₃,
wobei die Komponenten A und B in Stoffmengenverhäftnissen von 0,01 : 1 bis 2 : 1 und die Komponenten B und C in Stoffmengenverhältnissen von 1 : 3 bis 2 : 1 vorliegen,
als Additiv für Meerwasser, worin Meerestiere aufgezogen oder gehalten werden.

2. Verwendung nach Anspruch 1, **dadurch gekennzeichnet, daß** die Komponente B aus CaCl₂ und/oder CaSO₄ und Magnesiumsalzen aus der Gruppe Chlorid, Carbonat, Oxid und Sulfat besteht, wobei CaCl₂ und/oder CaSO₄ und die Magnesiumsalze in einem Stoffmengenverhältnis von 0,8 : 1 bis 10 : 1, bevorzugt 1 : 1 bis 6 : 1, vorliegen.

3. Verwendung nach Anspruch 1 oder 2, **dadurch gekennzeichnet, daß** die Komponente A und die Komponente B in einem Stoffmengenverhältnis von 1 : 1,3 bis 1,3 : 1 vorliegen:

4. Verwendung nach Anspruch 1 oder 2, **dadurch gekennzeichnet, daß** die Komponente A und die Komponente B in einem Stoffmengenverhältnis von 1 : 1,3 bis 1 : 2 vorliegen.

5. Verwendung nach einem der Ansprüche 1 bis 4, **dadurch gekennzeichnet, daß** die Komponente C aus NaHCO₃ und KHCO₃ besteht, wobei NaHCO₃ und KHCO₃ in Stoffmengenverhältnissen von 10 : 1 bis 1 : 1 vorliegen.

6. Verwendung nach einem der Ansprüche 1 bis 5, **dadurch gekennzeichnet, daß** die Komponente A bis zu 25 Gew.-% MgCO₃ enthält.

7. Verwendung nach einem der Ansprüche 1 bis 6, **dadurch gekennzeichnet, daß** die zusammensetzung zusätzlich Na₂CO₃ als Komponente D enthält.

8. Verwendung nach Anspruch 7, **dadurch gekennzeichnet, daß** die Komponenten C und D in Stoffmengenverhältnissen von 1 : 0,3 bis 1 : 0,01 vorliegen.

9. Verwenung nach einem der Ansprüche 1 bis 8, **dadurch gekennzeichnet, dass** die Zusammensetzung als weitere Komponente NaCI enthält.

10. Verwendung der Zusammensetzung nach einem der Ansprüche 1 bis 9, **dadurch gekennzeichnet, daß** die Meerestiere Fische, Krebstiere und Niedere Tiere sind.

11. Verfahren zur Aufbereitung von Wasser für die Aufzucht von Meerestieren, **dadurch gekennzeichnet, daß** als Additiv für das Meerwasser eine Zusammensetzung enthaltend
A. CaCO₃,
B. CaCl₂ und/oder CaSO₄ und ggf. M agnesiumsalze,
C. NaHCO₃ und ggf. KHCO₃,
wobei die Komponenten A und B in Stoffmengenverhältnissen von 0,01 : 1 bis 2 : 1 und die Komponenten B und C in Stoflmengenverhältnissen von 1 : 3 bis 2 : 1 vorliegen,
verwendet, und worin man die Komponenten B, CaCl₂ und/oder CaSO₄ und ggf. Magnesiumsalze, NaHCO₃ und ggf. KHCO₃, getrennt in H₂O löst, die Lösungen mit dem Meerwasser vermischt und das erhaltene Gemisch über bzw. durch CaCO₃ leitet.

12. Verfahren nach Anspruch 11, **dadurch gekennzeichnet, daß** das CaCO₃ als Festbett vorliegt.

## Claims

1. Use of a composition comprising
A. CaCO₃,
B. CaCl₂ and/or CaSO₄ and, if appropriate, magnesium salts,
C. NaHCO₃ and, if appropriate, KHCO₃,
components A and B being present in molar ratios of from 0.01:1 to 2:1 and components B and C being present in molar ratios of from 1:3 to 2:1, as additive for salt water in which marine animals are reared or kept.

2. Use according to Claim 1, **characterized in that** component B is composed of CaCl₂ and/or CaSO₄ and magnesium salts from the group consisting of chloride, carbonate, oxide and sulphate, and the CaCl₂ and/or CaSO₄ and the magnesium salts are present in a molar ratio of from 0.8:1 to 10:1, preferably from 1:1 to 6:1.

3. Use according to Claim 1 or 2, **characterized in that** component A and component B is present in a molar ratio of from 1:1.3 to 1.3:1.

4. Use according to Claim 1 or 2, **characterized in that** component A and component B is present in a molar ratio of from 1:1.3 to 1:2.

5. Use according to one of Claims 1 to 4, **characterized in that** component C is composed of NaHCO₃ and KHCO₃, where NaHCO₃ and KHCO₃ are present in molar ratios of from 10:1 to 1:1.

6. Use according to one of Claims 1 to 5, **characterized in that** component A comprises up to 25% by weight of MgCO₃.

7. Use according to one of Claims 1 to 6, **characterized in that** the composition additionally comprises Na₂CO₃ as component D.

8. Use according to Claim 7, **characterized in that** components C and D are present in molar ratios of from 1:0.3 to 1:0.01.

9. Use according to one of Claims 1 to 8, **characterized in that** the composition comprises NaCI as further component.

10. Use of the composition according to one of Claims 1 to 9, **characterized in that** the marine animals are fish, crustaceans and lower animals.

11. Method for treating water for rearing marine animals, **characterized in that** a composition comprising
A. CaCO₃,
B. CaCl₂ and/or CaSO₄ and, if appropriate, magnesium salts,
C. NaHCO₃ and, if appropriate, KHCO₃,
components A and B being present in molar ratios of from 0.01:1 to 2:1 and components B and C being present in molar ratios of from 1:3 to 2:1, are used as additive for the salt water and where component B, CaCl₂ and/or CaSO₄ and, if appropriate, magnesium salts, NaHCO₃ and, if appropriate, KHCO₃ are dissolved separately in H₂O, the solutions are mixed with the salt water and the resultant mixture is passed over or through CaCO₃.

12. Method according to Claim 11, **characterized in that** the CaCO₃ is present as solid bed.

## Revendications

1. Utilisation d'une composition contentant
A. CaCO₃
B. CaCl₂ et/ou CaSO₄ et, le cas échéant, des sels de magnésium,
C. NaHCO₃ et, le cas échéant KHCO₃,
les composants A et B étant présents dans des rapports de quantité de substance de 0,01 : 1 jusqu'à 2 : 1 et les composants B et C étant présents dans des rapports de quantité de substance de 1 : 3 jusqu'à 2:1,
comme addititif pour l'eau de mer, dans lequel les animaux marins sont élevés ou maintenus.

2. Utilisation selon la revendication 1, **caractérisée en ce que** le composant B est composé de CaCl₂ et/ou de CaSO₄ et des sels de magnésium de la groupe de chlorure, carbonate, oxyde et sulfate, CaCl₂ et/ou CaSO₄ et les sels de magnésium étant présents dans un rapport de quantité de substance de 0,8 : 1 jusqu'à 10 : 1, de préférence de 1 : 1 jusqu'à 6:1.

3. Utilisation selon la revendication 1 ou 2, **caractérisée en ce que** le composant A et le composant B sont présents dans un rapport de quantité de substance de 1 : 1,3 jusqu'à 1,3 : 1.

4. Utilisation selon la revendication 1 ou 2, **caractérisée en ce que** le composant A et le composant B sont présents dans un rapport de quantité de substance de 1 : 1,3 jusqu'à 1 : 2.

5. Utilisation selon l'une des revendications 1 à 4, **caractérisée en ce que** le composant C est composé de NaHCO₃ et de KHCO₃, NaHCO₃ et KHCO₃ étant présents dans des rapports de quantité de substance de 10 : 1 jusqu'à 1 : 1.

6. Utilisation selon l'une des revendications 1 à 5, **caractérisée en ce que** le composant A contient jusqu'à 25 % en poids de MgCO₃.

7. Utilisation selon l'une des revendications 1 à 6, **caractérisée en ce qu** la composition contient supplémentairement Na₂CO₃ comme composant D.

8. Utilisation selon la revendication 7, **caractérsisée en ce que** les composants C et D sont présents dans des rapports de quantité de substance de 1 : 0,3 jusqu'à 1 : 0,01.

9. Utilisation selon l'une des revendications 1 à 8, **caractérisée en ce que** la composition contient NaCI comme composant supplémentaire.

10. Utilisation de la composition selon l'une des revendications 1 à 9, **caractérisée en ce que** les animaux marins sont des poissons, des écrevisses et des animaux inférieurs.

11. Procédé de préparation de l'eau pour l'élevage des animaux marins, **caractérisé en ce qu**'on utilise comme additif pour l'eau de mer une composition contentant
A. CaCO₃
B. CaCl₂ et/ou CaSO₄ et, le cas échéant, des sels de magnésium,
C. NaHCO₃ et, le cas échéant KHCO₃,
les composants A et B étant présents dans des rapports de quantité de substance de 0,01 : 1 jusqu'à 2 : 1 et les composants B et C étant présents dans des rapports de quantité de substance de 1 : 3 jusqu'à 2:1,
et dans lequel on dissout séparément les composants B, CaCl₂ et/ou CaSO₄ et, le cas échéant, des sels de magnésium, NaHCO₃ et, le cas échéant, KHCO₃ dans H₂O, on mélange les solutions avec l'eau de mer et on fait passer le mélange obtenu sur respectivement à travers de CaCO₃.

12. Procédé selon la revendication 11, **caractérisé en ce que** le CaCO₃ est présent comme lit fixe.
